# EUROPEAN PATENT APPLICATION

(11) **EP 1 001 600 A2**
(43) Date of publication of application: **17.05.2000**
(21) Application number: 99115481.6
(22) Date of filing: 05.08.1999
(51) Int. Cl.: H04N 1/107

(54) **Two piece system for document image capture**

(30) Priority: 10.11.1998 US 189128
(71) Applicant: Hewlett-Packard Company, Palo Alto, California 94304 (US)
(72) Inventor: Oliver, Thomas C., Fort Collins, CO 80525 (US)
(74) Representative: Schoppe, Fritz, Dipl.-Ing.

(57) **Abstract**

A digital camera for capturing the image of a document comprising two detachable components. A camera pickup component comprises a lens system, a digitizing photo-receiver, and a transceiver. A camera control component comprises a display, a trigger button, and a transceiver, wherein said camera pickup transceiver and said camera control transceiver exchange control and image information. The camera pickup component may be held over a document in one hand, while the camera control component is held separately in the other hand to increase ease of use and reduce blurred images.

## Description

### Field of the Invention

The present invention relates generally to digital cameras, and more particularly, to a two piece digital camera improving ease of use and image quality.

### Background of the Invention

Digital cameras may be used to capture the image of a document much more rapidly than standard image scanners. A digital camera has a two dimensional image sensor array which captures an entire image simultaneously. A standard image scanner has a one dimensional image sensor array which must be moved over a document, producing individually detected lines which must then be pieced together to form a complete image. Digital cameras are described in the following application and patents which are hereby incorporated by reference for all that is disclosed therein.

US Patent 4,131,919, US Patent 4,420,773, and US Patent 4,541,010.

Conventional digital cameras are clumsy and ill suited for document imaging. A user must hover over the document while looking through a viewfinder and adjusting the focus or depth of field. The camera must be moved up or down to crop the image properly. Finally, the user must carefully press a button to take the picture, often resulting in camera motion. This camera motion can cause blurring and misalignment in the final image.

Digital cameras have been mounted on tripods or other types of fixed support arms to hold the camera steady. This solution has the disadvantage of requiring additional costly and bulky equipment. In addition, tripods and other such camera supports for document imaging reduce the portability of the camera system, which would otherwise be an advantage of digital cameras.

Tripods and other such camera supports are also difficult to set up and adjust. To adjust the crop area, or target area, on the document, the camera is raised or lowered with respect to the document. To do this, tripod legs must be adjusted or adjustment screws must be turned. Also the photographer must still hover over the tripod mounted camera to look through the viewfinder. Finally, care must be taken when pressing the camera button even with a tripod, as a tripod only limits camera movement, rather than eliminating it.

A need therefore exists for a digital camera system which can be more easily positioned over a document. A further need exists for a digital camera system with an improved viewfinder display. An additional need exists for a digital camera system in which camera motion caused by pressing a trigger button does not affect image quality.

### Summary

To assist in achieving the aforementioned needs, the inventor has devised a two piece digital camera for document image capture. Thus the invention may comprise a digital camera having a camera pickup component and a physically separate, independently positionable camera control component. The camera pickup component may comprise a lens system, a digitizing photo-receiver, and a transceiver. The camera control component may comprise a display, a trigger button, and a transceiver. The camera pickup transceiver and the camera control transceiver exchange control and image information.

The camera pickup and control components may also comprise interlocking clips for connecting the two components together as one unit. When a release button is pressed on the interlocking clips the pickup and control components separate into two individual units to be held in each hand of the user.

In the preferred embodiment, the camera pickup and camera control transceivers comprise infra-red transmitters and receivers. Alternatively, the transceivers may comprise radio frequency transceivers or may be connected by one or more conductive wires. Other signal transmission transceivers now known or later developed may also be used.

The camera pickup component transmits thumbnail images of the document, i.e., low resolution images, which are updated regularly and relatively quickly and are shown in the display of the camera control component. When the camera has been positioned as desired by monitoring the display in the control component, the trigger button in the camera control component is pressed. The camera control component transmits a command to the camera pickup component, causing the digitizing photo-receiver to capture a full resolution image of the document. The image may then be stored either in the camera pickup component or the camera control component. The two components may be held in opposite hands of the photographer or may be otherwise separately positioned, for example by hand positioning the pickup component while the control component is supported on a table top or bracket.

These and other important features and embodiments of the present invention will be further explained in, or will become apparent from, the accompanying description, drawing and claims.

### Brief Description of the Drawing

An illustrative and presently preferred embodiment of the invention is illustrated in the drawing, in which:
FIG. 1 is a diagram illustrating the elements of a two piece digital camera for document image capture;
FIG. 2 is a diagram illustrating the use of a two piece digital camera in which the display comprises an eyepiece; and
FIG. 3 is a diagram illustrating the use of a two piece digital camera in which the display comprises a panel.

### Description of the Preferred Embodiment

A digital camera is used to take pictures which are stored digitally, in the form of electrical signals, rather than storing the pictures visually using chemicals in photographic paper. Digital images produced by a digital camera must be processed by a computer to view or print them. Digital cameras may be used to capture the image of a document in one brief operation, unlike scanners which must scan over the surface of the document.

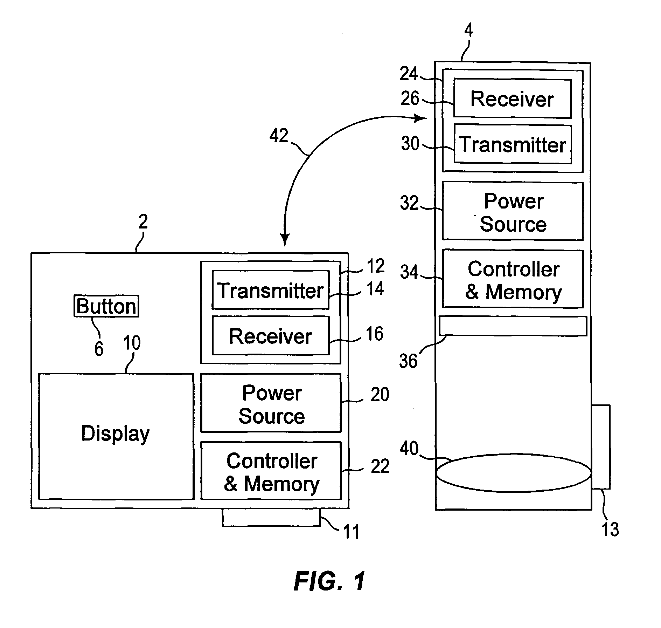

FIG. 1 illustrates a preferred embodiment of a digital camera for capturing the image of a document. The digital camera comprises two individual components, a camera control component 2 and a camera pickup component 4. Each has a separate housing, allowing the camera control component 2 to be held in one hand while the camera pickup component 4 is held in the other. Each component is preferably of a size and shape that is easily held and manipulated with one hand. Each component 2 and 4 may have an interlocking clip 11, 13, respectively, for connecting the camera control component 2 to the camera pickup component 4. The digital camera may therefore be clipped together into one integrated unit, or may be separated to facilitate use in document imaging, as will be described hereafter. The interlocking clip may comprise any connection mechanism, e.g., friction fit, latch and catch, screws, detents, sleeves, brackets, etc., depending upon the type of housing used for the camera control component 2 and the camera pickup component 4. Alternatively the camera may be provided without an interlocking clip.

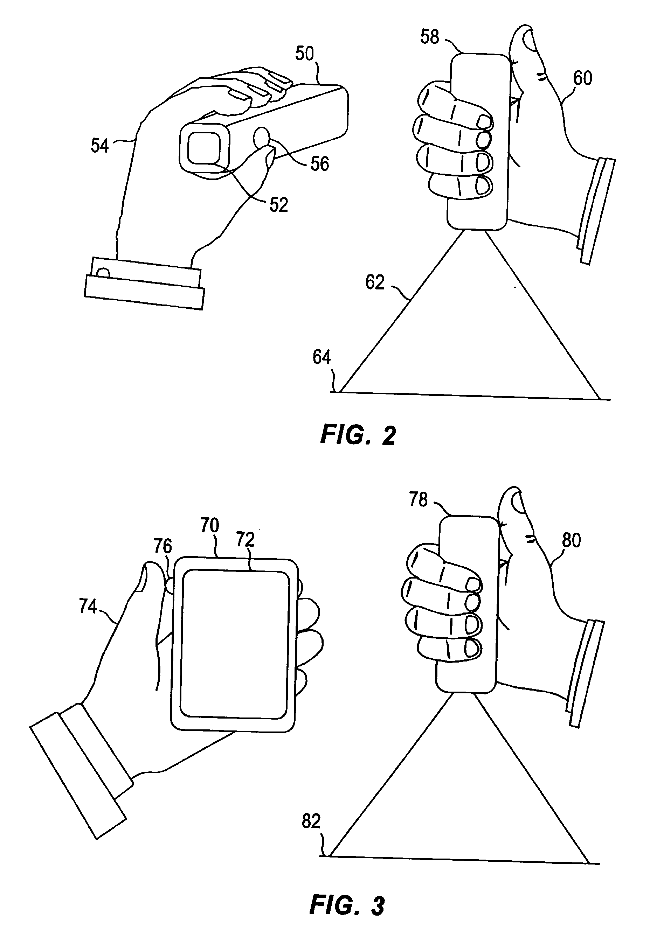

The camera pickup component 4 comprises an optical system 40 and a digitizing photo-receiver 36 for producing a digital image of a document (e.g., 64 FIG. 2) or other subject. Optical systems and digitizing photo-receivers (two dimensional photosensor arrays) for digital cameras are well known in the art. A controller and memory system 34 processes and stores the electrical image information produced by the digitizing photo-receiver 36. The memory may be for example a nonvolatile memory such as an EEPROM, a RAM, or other conventional memory device. A power source 32 preferably includes a battery and a battery circuit for regulating the voltage and current levels from the battery and for maximizing battery life. Such power sources are conventional and well known in the art.

The camera control component 2 also comprises a controller and memory system 34 and a power source 20. A display 10 in the camera control component 2 acts as the viewfinder of the digital camera, allowing the user to position and focus the camera pickup component 4 properly. A trigger button 6 causes the digital camera to take and store an image.

The camera control component 2 and the camera pickup component 4 each have a transceiver 12 and 24 which allow the components to exchange control and image information. The camera control component 2 transceiver 12 comprises a transmitter 14 for transmitting information to a receiver 26 in the camera pickup component 4 transceiver 24. The camera pickup component 4 transceiver 24 also contains a transmitter 30 for transmitting information to a receiver 16 in the camera control component 2. The transceivers may be of a wireless type such as infra-red, radio frequency, etc., or alternatively may be physically linked as by electrical signal transmission leads, optical fiber or other signal transmission media.

In one preferred embodiment, illustrated in FIG. 2, the display (e.g., 10) in the camera control component 50 comprises an eyepiece display 52. To capture the image of a document in this embodiment, the user first separates the camera control component 50 from the camera pickup component 58 by releasing the interlocking clips. The camera control component 50 is held in one hand 54 while the camera pickup component 58 is held in the other hand 60. The eyepiece display 52 is brought to the user's eye, and the camera pickup component 58 is held over a document 64 or other such subject. The camera pickup component 58 is oriented to direct the optical system 40 at the document 64.

As light reflects from the document 64, the reflected image light 62 enters the optical system 40 of the camera pickup component 58 and is converted to a digital representation of the image, either as a low resolution thumbnail image or as a final full resolution image.

In this preferred embodiment, the camera pickup component 58 continuously processes low resolution thumbnail images and transmits them to the camera control component 50 via the transceivers 12 and 24. The thumbnail images are displayed in the eyepiece display 52, allowing the user to orient and position the camera pickup component 58. Low resolution images may be processed and transmitted more quickly than full resolution images and are thus usefully employed where processing power and/or signal transmission speed are use limiting considerations. For example, an exemplary full resolution image may be 640 pixels wide and 480 pixels high, while an exemplary low resolution image may be only 32 pixels wide and 24 pixels high. In this case, a full resolution image would require the transmission of at least 307,200 pixels, but a low resolution image would require the transmission of around 768 pixels. However, full resolution image capture and transmission could also be used for orienting the camera if desired.

When the camera pickup component 58 is positioned as desired, the user presses the trigger button 56 of the camera control component 50. The camera control component 50 then transmits a command to the camera pickup component 58, causing it to take a full resolution image of the document 64. The image may then be stored in the memory 34 of the camera pickup component 58. Alternatively, the full resolution image may be transmitted to the camera control component 50 and stored in its memory 22.

In another embodiment, the display (e.g., 10) comprises a panel display 72 as illustrated in FIG. 3. The camera control component 70 may be held in one hand 74, while the camera pickup component 78 is held in the other hand 80. The panel display 72 in the camera control component 70 may be held at arms length or at any comfortable viewing distance from the user, while the camera pickup component 78 is positioned over a document 82 as described above. Alternatively panel display 72 may be positioned on a table (not shown) or other support where it may be easily viewed by the user.

The user positions the camera pickup component 78 as desired by monitoring the panel display 72 while moving the camera pickup component 78 over the document 82. When the desired image is seen in the panel display 72, the user presses the trigger button 76 on the camera control component 70 to process and store a full resolution image of the document 82.

The trigger button 6, 56, and 76 is located on the camera control component 2, 50, and 70, isolating camera movement caused by pressing the button. As a result, the camera pickup component 4, 58, and 78 can be held steady in the non-moving hand 60 and 80 to avoid blurring the image. The display 10, 52, and 72 is also located on the camera control component 2, 50, and 70, allowing the user to easily see the image and position the camera pickup component 4, 58, and 78 without hovering over the document 64 and 82.

It will also be appreciated that although the separate control and pickup components may be held in opposite hands during use, that either or both components may also be positioned on a support surface or mount during use. For example the pickup component could be supported above a document on a tripod or the like with the control component positioned on a flat surface next to the document.

Having described the two piece digital camera for capturing a document image in general, as well as some of its more significant features and advantages, some of the various embodiments of such a digital camera will now be described in more detail.

As shown in FIG. 1, the optical system 40 may comprise any system or apparatus for directing image light (e.g., 62 FIG. 2) onto the digitizing photo-receiver. One such optical system 40 is the lens system described in US Patent application, serial number , for DIGITAL CAMERA FIELD LENS of Donald Stavely (Attorney docket number HP: 10971803-1). The optical system 40 may also comprise infinite focus lenses, auto-focus lenses, manual focus lenses, or zoomable lenses.

The digitizing photo-receiver 36 may comprise any type of optical sensor for converting image light into an electrical representation of the image, such as a two dimensional array of optical sensors. Optical sensor devices which could be used include contact image sensors (CIS) and charge coupled device (CCD) image sensors, or other known or later developed sensors.

The display 10 may comprise any type of display for displaying either low resolution thumbnail images or full resolution images. In a preferred embodiment a display (e.g., 52 and 72) comprises a liquid-crystal display (LCD) panel. Alternatively, the display may comprise a thin-film transistor (TFT) display, a plasma display panel (PDP), a light-emitting diode (LED) array or any other type of display panel now known or which may be developed in the future.

The transceiver 12 and 24 of the preferred embodiment comprises an infra-red transmitter and receiver. Alternatively, the transceiver 12 and 24 may comprise any transmitter and receiver suitable for transmission and reception across a distance of up to about four feet, such as a radio frequency (RF) transceiver, or may comprise a cable connection across one or more conductive wires, optical cables, etc.

While illustrative and presently preferred embodiments of the invention have been described in detail herein, it is to be understood that the inventive concepts may be otherwise variously embodied and employed, and that the appended claims are intended to be construed to include such variations, except as limited by the prior art.

## Claims

1. A digital camera for capturing the image of a document, comprising:
a camera pickup component 4 comprising a lens system 40, a digitizing photo-receiver 36, and a transceiver 24; and
a camera control component 2 comprising a display 10, a trigger button 6, and a transceiver 12, wherein said camera pickup transceiver 24 and said camera control transceiver 12 exchange control and image information.

2. The camera of claim 1, wherein said camera pickup transceiver 24 and said camera control transceiver 12 comprise infra-red transceivers.

3. The camera of claim 1, wherein said camera pickup transceiver 24 and said camera control transceiver 12 comprise radio-frequency transceivers.

4. The camera of claim 1, wherein said camera pickup transceiver 24 is connected to said camera control transceiver 12 with one or more signal transmitting cables.

5. The camera of claim 1, wherein said camera pickup component 4 and said camera control component 2 are releasably connected.

6. The camera of claim 1, wherein said control and image information comprises a command from said camera control component 2 to said camera pickup component 4 to capture an image of said document.

7. A method of manufacturing a digital camera for capturing an image of a document, comprising:
providing a housing for a camera pickup component 4;
mounting a lens system 40 in said camera pickup housing;
mounting a digitizing photo-receiver 36 in said camera pickup housing;
mounting a transceiver 24 in said camera pickup housing;
mounting a locking clip 13 in said camera pickup housing;
providing a housing for a camera control component 2 which is separate from said housing for a camera pickup component 4;
mounting a display 10 in said camera control housing;
mounting a trigger button 6 in said camera control housing; and
mounting a transceiver 12 in said camera control housing.

8. The method of claim 7, further comprising mounting a locking clip e.g. 11 & 13 on at least one of said camera control housing and said camera pickup housing to detachably connect said camera pickup housing to said camera control housing.

9. A method of capturing an image of a document, comprising:
positioning a camera pickup component 4 over said document with a lens system 40 of said camera pickup component 4 pointed toward said document; and
viewing an image of said document in a display 10 of a camera control component 2 positioned remotely from said pickup component 4.

10. The method of claim 9, further comprising adjusting a position of said camera pickup component 4 relative to said document; and
actuating a trigger button 6 on said camera control component 2, causing a transceiver 12 on said camera control component 2 to transmit a command to a transceiver 24 on said camera pickup component 4 to cause said camera pickup component 4 to capture the image of said document.
